# EUROPEAN PATENT APPLICATION

(11) **EP 3 454 098 A1**
(43) Date of publication of application: **13.03.2019**
(21) Application number: 17200303.0
(22) Date of filing: 07.11.2017
(51) Int. Cl.: G02B 5/10, G02B 27/02, G02B 27/14, H04N 5/64

(54) **SYSTEM WITH SEMI-TRANSPARENT REFLECTOR FOR MIXED/AUGMENTED REALITY**

(30) Priority: 12.09.2017 DK 201770686
(71) Applicant: Realfiction ApS, 2100 København Ø (DK)
(72) Inventor: SIMONSEN, Peter, 2100 Copenhagen Ø (DK); CORELL, Morten, 2100 Copenhagen Ø (DK)
(74) Representative: Zacco Denmark A/S

(57) **Abstract**

Disclosed is a system (1) for presenting a mixed reality to a user (2). The system (1) comprising a semi-transparent reflector (4), the semi-transparent reflector comprises a first surface (6) configured to face an image source (7), and the semi-transparent reflector comprises a second surface (8) configured to face the user (2), where the second surface (8) is convex. The second surface (8) of the semi-transparent reflector comprises a partially reflective layer (10) for providing a mirror image (12) of the user on a user side (14) of the semi-transparent reflector. An image (3) projected onto the first surface is transmitted through the semi-transparent reflector to provide a representation (5) of the image (3), i.e. a virtual image, appearing on the user side (14) of the semi-transparent reflector. Thereby the user perceives himself in the representation (5) of the image (3), i.e. the virtual image, when looking at the second surface (8) of the semi-transparent reflector thereby presenting the mixed reality to the user.

## Description

### TECHICAL FIELD

The present disclosure relates to a system and devices for presenting a mixed reality to a user, the system comprising a semi-transparent reflector, the semi-transparent reflector comprises a first surface configured to face an image source and a second surface configured to face the user, where the second surface of the semi-transparent reflector comprises a partially reflective layer for providing a mirror image of the user on a user side of the semi-transparent reflector.

### BACKGROUND

Devices, such as toy systems or exhibition systems, providing augmented and/or mixed reality to a user is known, where the augmented reality (AR) is a live direct or indirect view of a physical, real-world environment whose elements are augmented by computer-generated sensory input such as sound, video, or graphics.
However, there is a desire to improve a user's perception and/or interaction with augmented reality devices.

### SUMMARY

Disclosed is a system for presenting a mixed reality to a user, the system comprising:
- a semi-transparent reflector, the semi-transparent reflector comprises a first surface configured to face an image source and a second surface configured to face the user, where the second surface is convex, and where the second surface of the semi-transparent reflector comprises a partially reflective layer for providing a mirror image of the user on a user side of the semi-transparent reflector;
wherein an image projected onto the first surface is transmitted through the semi-transparent reflector to provide a representation of the image, i.e. a virtual image, appearing on the user side of the semi-transparent reflector;
thereby the user perceives himself in the representation of the image, i.e. the virtual image, when looking at the second surface of the semi-transparent reflector thereby presenting the mixed reality to the user.

The image source is arranged on an image source side opposite to the user side and projects a real image onto the first side of the semi-transparent reflector. The real image is transmitted through the semi-transparent reflector to provide a virtual image on the user side, where it is perceived by the user looking at the semi-transparent reflector as appearing on the user side. In addition to the virtual image, the user will also see his mirror image reflected from the partially reflective layer on the second side. Accordingly, when the user looks at the semi-transparent reflector he will perceive a mixed reality of himself in the virtual image.

The real image projected by the image source may be a single image and/or a video comprising a plurality of image frames and/or animations and/or computer graphics etc. If the real image comprises a character, the virtual image comprises this character, and accordingly the character appears to the user as being present together with the user on the user side.

In the context of the present disclosure, the phrases "augmented reality" and "mixed reality" are used interchangeably.

In the context of the present disclosure, the phrase "the user perceives himself in the representation of the image" refers to the situation where the user perceives that the content of the image is located at the user's physical location, i.e. at the user side together with the user.

Some prior art systems record an image of the user and combine this image with e.g. an image of a scene to provide a combined image which is displayed on a screen. Other prior art systems use an avatar which mimics the users position and movement, such that an image of the avatar in a given scene is visualized on a screen.

The system as disclosed provides an improved user perception, experience and/or interaction with the augmented reality. As an image source is arranged for projecting a real image onto the semi-transparent reflector thereby providing a virtual image, where the virtual image is perceived by the user as appearing on the user side, the user will perceive himself as being in the representation of the image. If the virtual image comprises an object or a character, such as a doll, a cartoon character, a figure, a person etc., the system provides an illusion for the user that the object or character is present together with the user on the user side of the reflector, e.g. close to the user in the same room. For the user, for example a child, such experienced presence of an object or character, may provide a powerful, intense, and vivid user experience, which may enhance the joy of play for the child.

Augmented reality (AR) is a live direct or indirect view of a physical, real-world environment whose elements are augmented by computer-generated sensory input such as sound, video, or graphics. It is related to a more general concept called computer-mediated reality, in which a view of reality is modified by a computer. Augmented reality enhances the user's current perception of reality, whereas in contrast, virtual reality replaces the real world with a simulated one. Augmentation techniques are typically performed in real time and in semantic context with environmental elements, such as overlaying supplemental information.

With the help of advanced AR technology, e.g. adding computer vision and object recognition, the information about the surrounding real world of the user becomes interactive and digitally manipulable. Information about the environment and its objects is overlaid on the real world. This information can be virtual or real. Augmented reality brings out the components of the digital world into a person's perceived real world.

### Arrangement of semi-transparent reflector and image source

An optical axis of the system may be defined from the path followed by the images projected from the image source onto the semi-transparent reflector.

In some embodiments, the optical axis and a surface normal of the semi-transparent reflector are both horizontal, such as when both the semi-transparent reflector and the image source arranged vertical.

The semi-transparent reflector and the image source may be arranged parallel to each other, or substantially parallel to each other, such that the optical axis and the surface normal of the semi-transparent reflector are parallel.

The semi-transparent reflector may be arranged substantially vertical with a substantially horizontal surface normal and the image source may be arranged horizontal.

The distance from the image source to the semi-transparent reflector may be in the range of 5 cm to 800 cm. Distances in the long end of this range are mostly appropriate e.g. for giant LED screens, while distances in the short end of the range also are useful for devices providing images with a cross section in the range of 5" to 15", such as a smart phone or a tablet computer.

The distance between the semi-transparent reflector and the image source may be in the range of 1 cm to 300 cm, such as in the range of 25 cm to 100 cm, such as in the range of 50 cm-100 cm. The distance between the semi-transparent reflector and the user may be in the range of 1 meter - 3 meters.

The semi-transparent reflector may be in a wide range of sizes such as from 10 cm x 10 cm to about 6 meters x 3.2 meters.

### Larger field of view

In some embodiments, the second surface of the semi-transparent reflector facing the user is convex. A convex surface may be defined as a surface curving outwards, e.g. the second surface curving outwards towards the user side. For example, all interior angles of the second surface may be less than or equal to 180°.

A convex second surface of the semi-transparent reflector provides an improvement, compared to cases where the second surface e.g. is flat, in that the semi-transparent reflector reflects light received from a larger field of view towards the user and thus creates a perceived smaller image of the objects located on the user side of the semi-transparent reflector. I.e. the user perceives a smaller image of himself/herself along with the virtual image(s) provided by the image source. A convex second surface provides that a semi-transparent reflector and an image sources with dimensions smaller than the user can be used to provide that the user perceives himself/herself as part of the created mixed reality.

The smaller the radius of curvature of the convex second surface, the larger the field of view provided by the semi-transparent reflector and the smaller objects located on the user side will appear in the reflected mirror image.

The radius of curvature of the first and second surfaces of the semi-transparent reflector may be about 1500 mm - 3000 mm, such as about 2500 mm or about 2800 mm. The image source may be a 55" flat screen image device, e.g. television screen.

In some embodiments, the first surface of the semi-transparent reflector facing the image source is concave. A concave surface may be defined as a surface curving inwards, e.g. the first surface curving inwards towards the image source side. For example, at least one interior angle of the first surface may be greater than 180°. The radius of curvature for the first surface may be equal to or larger than the radius of curvature for the second surface, i.e. the semi-transparent reflector is thicker at the center than at the periphery, such that the semi-transparent reflector acts as a positive lens.

The radius of curvature of the first and second surfaces of the semi-transparent reflector may be about 600 mm - 1200 mm, such as about 1000 mm. The image source may be a tablet image device, e.g. an ipad.

In some embodiments, the first surface of the semi-transparent reflector comprises an anti-reflective layer.

Having an anti-reflective layer, such as an anti-reflective coating, on the first surface facing the image source provides that additional reflections of the user by the interface to the surrounding atmosphere are suppressed. Such further reflections could potentially deteriorate the quality of the mirror image of the user and thus lower the quality of the user experience.

The partially reflective layer on the second surface of the semi-transparent reflector may comprise or be a dielectric coating. The partially reflective layer may provide 5% to 75%, such as 10%-50% reflection of the light impinging on the second surface from the user space.

The partially reflective layer may comprise a dielectric mirror consisting of multiple thin layers of dielectric materials forming a Bragg grating.

The semi-transparent reflector is preferably designed such that it only reflects a portion of the light forming the image. In some embodiments, the semi-transparent reflector comprises a substrate of highly transparent material with the partially reflective layer on the second surface.

The semi-transparent reflector is an optical element providing transmission and reflection.

It is an advantage that the user may not be able to see the image source through the semi-transparent reflector. This can be obtained by having the light source arranged in a dark enclosure, e.g. an enclosure being part of a construction supporting the semi-transparent reflector. The anti-reflective coating on the first side of the semi-transparent reflector is also beneficial for this purpose since it suppresses the reflection of light in the images projected by the image source which otherwise could illuminate the image source and make it more visible.

### Light source

In some embodiments, the system comprises one or more light sources arranged for illuminating the user for enhancing the mirror image of the user.

The light source may be a distributed light source illuminating the user from several directions, such as a ring shaped light source encircling the semi-transparent reflector, or elongated light sources arranged along sections of the perimeter of the semi-transparent reflector. The light source may comprise light emitting diodes (LED).

Using a distributed light source provides a more homogeneous illumination of the user and thus an improved user experience where the mirror image of the user is clear in the mixed reality.

The intensity of the light source may be adjusted in real-time based on a measurement of the user's distance to the light source such that the user mirror image remains clear when the user moves relative to the semi-transparent reflector.

### Image source

In some embodiments, the image source is a screen or display connected to an electronic device, such as a portable electronic device, such as a tablet or mobile phone. Thus the electronic device may generate the real image, and the image device being a screen or display connected to the electronic device, may then display the real image to be projected onto the semi-transparent reflector.

A virtual image is an image formed when the outgoing rays from a point on an object always diverge. The virtual image appears to be located at the point of apparent divergence. Because the rays never really converge, a virtual image cannot be projected onto a screen. The virtual images can be located by tracing the real rays that emerge from an optical device (lens, mirror, or some combination) backward to a perceived point of origin.

In contrast, a real image is one that is formed when the outgoing rays form a point converging at a real location. Real images can be projected onto a diffuse reflecting screen, but a screen is not necessary for the image to form.

### Motion tracker

In some embodiments the system comprises a motion tracker arranged for tracking position and movements of the user relative to the system and thus relative to the representation of the image, i.e. the virtual image. The motion tracker may be a camera. The camera may be a stereo-camera, a mono-camera, a pin-hole camera and/or the like.

The position of the motion tracker relative to the semi-transparent reflector and/or relative to the image source may be known, such as when the motion tracker is fixated on a frame of the semi-transparent reflector. When the relative arrangement of the other parts of the system, i.e. the image source and the semi-transparent reflector, also is known, the user's position relative to the content of a given image can be determined from knowledge of the spatial distribution of the content of the image.

A calibration of the system may be performed, e.g. by tracking the user's position and movement in repose to various virtual images to indicate where the user perceives certain content of a virtual calibration image to be located.

In some embodiments the motion tracker provides or is configured to provide a feedback for providing user interaction with the representation of the image, i.e. a virtual image. The motion tracker may be used for providing a mask, silhouette, cut-out and/or the like of the user using e.g. a physics engine. Hereby the user may interact with the virtual image, e.g. in a computer game, since the user may perceive him/her self as being arranged in front, beside or behind the virtual image. For example if the computer game comprise moving balls, the user may interact with the moving balls in the virtual image, such that the user controls the balls in the virtual image, e.g. catching the balls, throwing the balls, pushing the balls etc.

The feedback may be provided directly to the image source or to a control unit analysing the user's movements and adjusting the images provided by the image source.

The position and movements of the user may be tracked based on spatial tracking wherein both space and persons can be tracked in full 3D. The spatial tracking can be performed using stereo cameras or other systems know to the skilled person. It also allows for depth measurement in 3D tracking.

### Control unit

In some embodiments, the system comprises a control unit configured to control:
- the light source, such as controlling the intensity, color, spatial distribution and/or direction of the light used for illuminating the user; and/or
- the image source, such as adjusting the intensity or content of the provided images.

When controlling the light source the control system may receive information relating to various parameters, such as the user's distance to the light source, and adjust the different properties of the provided light accordingly. The light source may also be controlled based on different situations, such as when it is controlled how clearly the user perceives himself relative to the content of the virtual images. This may e.g. be the case in computer games with short video stories between different stages of the game.

Controlling the content of the images provided by the image source in response to e.g. the user's position and movements allows for interaction with e.g. a computer game.

In some embodiments, the control unit is configured to control the image source based on the tracked position and movements of the user. The control unit may then provide feedback to the image source to adjust e.g. the content of the displayed images and/or the position, orientation and movement of different element in the images.

This provides for an interactive experience where the content of the provided images is adjusted based on the user's movements. For example in a computer/video game where the image contains a number of balls which the user should touch or grab, the portion of the image corresponding to the a ball explodes and disappears from the image when the user brings his hand to the location where the part of the virtual image corresponding to that ball is displayed.

In some embodiments, the system comprises a distance measuring unit configured for continuously measuring the distance from the user to the light source of the system. The motion tracker may also be used to detect the distance to the user. The distance measuring unit could be a time of flight device e.g. for a solution without a motion tracker where it still is relevant to adjust the illumination of the user.

In some embodiments, the intensity of the light used for illuminating the user is controlled based on a result of the distance measurement. This can be handled by the control unit when this is configured for controlling the light source based on the distance measurement.

In order to provide that the reflection of the user appears clearly in the mixed reality provided by the system it may be necessary to illuminate the user. When the light source is such that the illumination of the user is weaker with increasing distance to the system, the mirror reflection will appear weaker and the user will not experience himself as clear in the mixed reality. Based in the measured distance, the control unit can adapt the intensity of the light source such that a constant illumination of the user is provided whereby the user's perception of being in the virtual image is improved.

In addition to his reflection, the user may further see reflections from physical objects located on the user side in the semi-transparent reflector.

Disclosed is a system for presenting a mixed reality to a user, the system comprising:
- a semi-transparent reflector comprising a first surface and a second surface, where the second surface comprises a partially reflective layer for providing a mirror image of a user located on a user side of the semi-transparent reflector, such that when an image projected by an image source onto the first surface is transmitted through the semi-transparent reflector a representation of the image, i.e. a virtual image, appears on the user side of the semi-transparent reflector and the user located on the user side will perceive himself in the representation of the image, i.e. the virtual image, when looking at the second surface of the semi-transparent reflector thereby presenting the mixed reality to the user.

Disclosed is a semi-transparent reflector comprising:
- a first surface; and
- a second surface comprising a partially reflective layer for providing a mirror image of a user facing the second surface from a user side of the semi-transparent reflector,
such that when an image projected by an image source onto the first surface is transmitted through the semi-transparent reflector a representation of the image, i.e. a virtual image, appears on the user side of the semi-transparent reflector and the user located on the user side will perceive himself in the representation of the image, i.e. the virtual image, when looking at the second surface of the semi-transparent reflector thereby presenting the mixed reality to the user.

The semi-transparent reflector may be combined with an image source to form a system for presenting a mixed reality to a user.

Disclosed is a method for presenting a mixed reality to a user, the method comprising:
- providing a representation of an image, i.e. a virtual image, to the user by projecting an image from an image source onto a first surface of a semi-transparent reflector while the user is facing a second surface of the semi-transparent reflector,
where the second surface of the semi-transparent reflector comprises a partially reflective layer for providing a mirror image of the user such that the user perceives himself together with the representation of the image, i.e. the virtual image, thereby presenting the mixed reality to the user.

The present invention relates to different aspects including the system described above and in the following, and corresponding system parts, semi-transparent reflectors, uses and/or methods, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1 schematically illustrates a system for presenting a mixed reality to a user.
Fig. 2a) and 2b) schematically illustrate the second surface of the semi-transparent reflector comprising a partially reflective layer for providing a mirror image of the user.
Fig. 3 schematically illustrates a light source and a motion tracker.
Fig. 4 schematically illustrates the design of a semi-transparent reflector according to one embodiment.
Fig. 5 schematically illustrates a system for presenting a mixed reality to a user.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

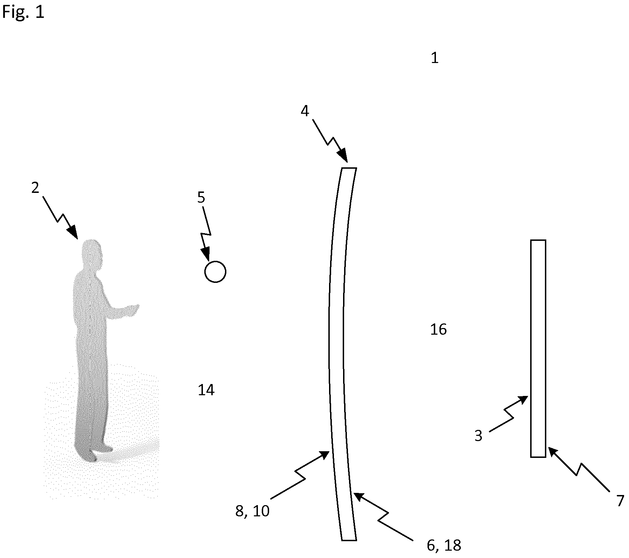

Fig. 1 schematically illustrates a system 1 for presenting a mixed reality to a user 2. The system 1 comprises a semi-transparent reflector 4. The semi-transparent reflector comprises a first surface 6 configured to face an image source 7, and the semi-transparent reflector 4 comprises a second surface 8 configured to face the user 2. The second surface 8 of the semi-transparent reflector 4 comprises a partially reflective layer 10 for providing a mirror image (not shown in fig. 1) of the user on a user side 14 of the semi-transparent reflector. The image source 7 is arranged on an image source side 16 opposite to the user side 14 for projecting an image 3. The image 3 is transmitted through the semi-transparent reflector to provide a representation 5 of the image 3, i.e. a virtual image, appearing on the user side 14 of the semi-transparent reflector. Thereby the user perceives himself in the representation 5 of the image 3, i.e. the virtual image, when looking at the second side 8 of the semi-transparent reflector 4, thereby presenting the mixed reality to the user 2.

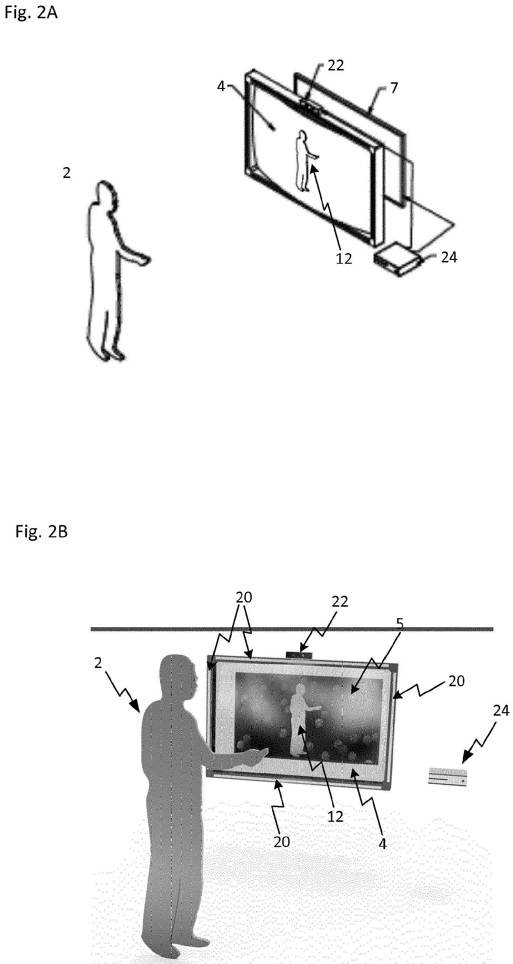

Figs. 2A and 2B schematically illustrate the system as seen from a user 2 standing on the user side 14. The second surface of the semi-transparent reflector 4 has a partially reflective layer for providing a mirror image 12 of the user 2. The image source 7 is arranged opposite to the user 2 and projects an image 3 onto the semi-transparent reflector 4 such that a representation 5 of the image 3, i.e. the virtual image, is provided to the user. The user 2 thereby perceives himself/herself, in/as the mirror image 12, in the representation 5 of the image, i.e. the virtual image, when looking into the convex second surface of the semi-transparent reflector 4, thereby presenting the mixed reality to the user 2. Four elongated light sources 20 are arranged on the frame surrounding the semi-transparent reflector 4 to ensure a uniform illumination of the user. This provides that the mirror image 12 of the user 2 can appear clear improving the user experience. The image source 7 is a 55" screen and the convex second surface of the semi-transparent reflector 4 has a 2400mm radius of curvature. This configuration provides that the user 2 when standing about 2-3 meters from the semi-transparent reflector 4 will perceive himself/herself as being completely inside the virtual image as part of the mixed reality. The system has a motion tracker 22 for detecting the positon and movements of the user 2 relative to the semi-transparent reflector 4. A control unit 24 receives data expressing the user positon and movements from the motion tracker 22 and uses these data to control the image source 7, e.g. by adjust the content of the images projected onto the semi-transparent reflector 4.

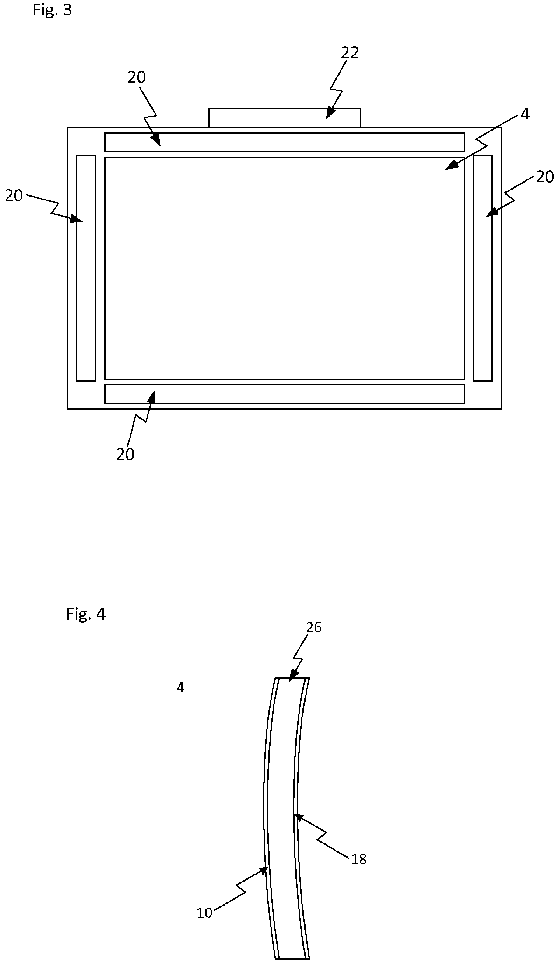

Fig. 3 schematically illustrates light sources 20 arranged for illuminating the user (not shown) for enhancing the mirror image (not shown) of the user. The light sources 20 may be arranged on the second side 8 of the semi-transparent reflector 4, e.g. on a frame of the semi-transparent reflector.

Fig. 3 schematically illustrates a motion tracker 22 arranged for tracking position and movements of the user relative to the representation 5 of the image 3, i.e. the virtual image. The motion tracker 22 may be arranged on the second side 8 of the semi-transparent reflector 4, e.g. on a frame of the semi-transparent reflector.

Fig. 4 schematically illustrates a design of a semi-transparent reflector 4.

In the illustrated design, the semi-transparent reflector 4 has a highly transparent substrate 26 with an anti-reflective layer 18 deposited on the concave surface configured for facing the image source and a partially reflective layer 10 on the convex surface configured for facing the user.

The partially reflective layer 10 provides that the semi-transparent reflector 4 will reflect some light from the user such that a mirror image is formed. The anti-reflective layer 18 of the opposite surface facing the image source suppresses addition reflections such that the mirror image of the user does not also contain a strong component from this surface.

The illustrated semi-transparent reflector 4 is designed to provide a large field of view for the light received from the user side and reflected by semi-transparent reflector towards the user. For example, an image projected from a 55" screen acting as the image source and a 2400mm radius of curvature on the semi-transparent reflector provides with the user arranged about 2-3 meters from the semi-transparent reflector that the reflected image of the user is smaller than the semi-transparent reflector such that the user perceives his entire body together with the representation of the image, i.e. the virtual image.

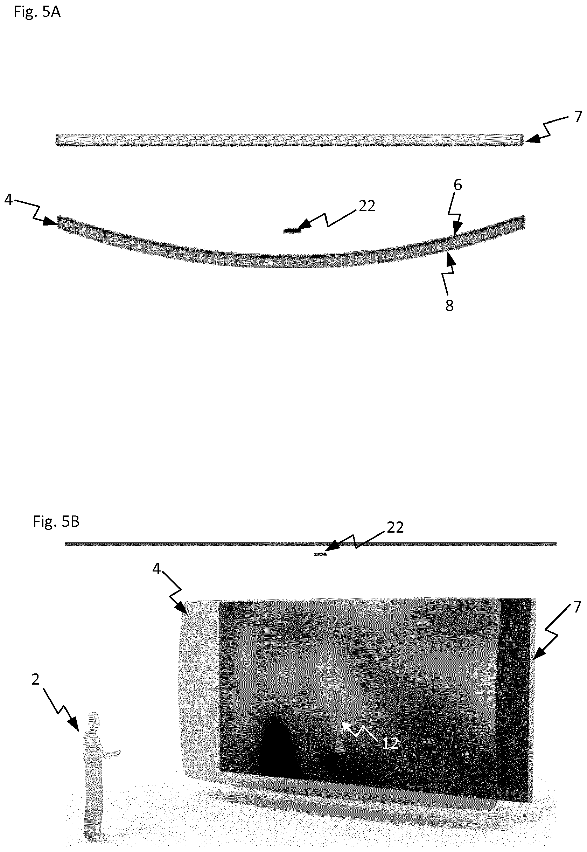

Fig. 5 schematically illustrates an embodiment of the system for presenting a mixed reality to a user on a large scale.

Fig. 5A shows the system as seen from above. The image source 7 may be a 6000 mm wide LED screen projecting images onto the concave first surface 6 of the semi-transparent reflector 4 which may have a 9000 mm radius of curvature. The semi-transparent reflector has a partially reflective layer on the convex second side 8 for providing a mirror image of a user standing in front of the semi-transparent reflector. A motion tracker 22 is arranged to capture the movements and position of the user relative to the system and hence relative to the virtual images provided to the user. Fig. 5B shows the system as seen from the user side. The partially reflective layer on the convex second side 8 of the semi-transparent reflector 4 provides that the user 2 sees a mirror image 12 of himself when looking at the semi-transparent reflector.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### LIST OF REFERENCES

- 1: system
- 2: user
- 3: image
- 4: semi-transparent reflector
- 5: representation of image (3), i.e. virtual image
- 6: first surface of semi-transparent reflector
- 7: image source
- 8: second surface of semi-transparent reflector
- 10: partially reflective layer
- 12: mirror image
- 14: user side of the semi-transparent reflector
- 16: image source side of the semi-transparent reflector
- 18: anti-reflective layer
- 20: light source
- 22: motion tracker
- 24: control unit
- 26: substrate of semi-transparent reflector

## Claims

1. A system (1) for presenting a mixed reality to a user (2),
the system (1) comprising a semi-transparent reflector (4), the semi-transparent reflector comprises a first surface (6) configured to face an image source (7),
and the semi-transparent reflector comprises a second surface (8) configured to face the user (2), where the second surface (8) is convex,
where the second surface (8) of the semi-transparent reflector comprises a partially reflective layer (10) for providing a mirror image (12) of the user on a user side (14) of the semi-transparent reflector;
wherein an image (3) projected onto the first surface is transmitted through the semi-transparent reflector to provide a representation (5) of the image (3), i.e. a virtual image, appearing on the user side (14) of the semi-transparent reflector;
thereby the user perceives himself in the representation (5) of the image (3), i.e. the virtual image, when looking at the second surface (8) of the semi-transparent reflector thereby presenting the mixed reality to the user.

2. The system (1) according to any of the preceding claims, wherein the first surface of the semi-transparent reflector comprises an anti-reflective layer (18).

3. The system (1) according to any of the preceding claims, wherein the system comprises a light source (20) arranged for illuminating the user for enhancing the mirror image of the user.

4. The system (1) according to any of the preceding claims, wherein the system comprises a motion tracker (22) arranged for tracking position and movements of the user relative to the system and thus relative to the representation (5) of the image (3), i.e. the virtual image.

5. The system (1) according to any of the preceding claims, wherein the motion tracker (22) provides a feedback for providing user interaction with the representation (5) of the image (3), i.e. a virtual image.

6. The system (1) according to any of the preceding claims, wherein the system comprises a control unit configured to control:
- the light source (20), such as controlling the intensity, color, spatial distribution and/or direction of the light used for illuminating the user; and/or
- the image source (7), such as adjusting the intensity or content of the provided images.

7. The system (1) according to claim 6, wherein the control unit is configured to control the image source based on the tracked position and movements of the user.

8. The system (1) according to any of the preceding claims, wherein the system comprises a distance measuring unit configured for continuously measuring the distance from the user to the light source of the system.

9. The system (1) according to claim 8 as dependent on claim 7, wherein the intensity of the light used for illuminating the user is controlled based on a result of the distance measurement.
